# EUROPÄISCHE PATENTSCHRIFT

(11) **EP 2 875 971 B1**
(45) Veröffentlichungstag und Bekanntmachung des Hinweises auf die Patenterteilung: **26.02.2020**
(21) Anmeldenummer: 14193325.9
(22) Anmeldetag: 14.11.2014
(51) Int. Cl.: B60D 1/48, B66F 19/00, B60D 1/00

(54) **Schleppzug mit einem Schleppfahrzeug und mindestens einem geschleppten Anhänger**
Trailer train with a tractor and at least one towed trailer
Ensemble articulé pour un véhicule remorquer et au moins une remorque remorquée

(30) Priorität: 15.11.2013 DE 102013112635
(43) Veröffentlichungstag der Anmeldung: 27.05.2015
(73) Patentinhaber: Jungheinrich Aktiengesellschaft, 22047 Hamburg (DE)
(72) Erfinder: Magens, Dr. Ernst-Peter, 22949 Ammersbek (DE)
(74) Vertreter: Hauck Patentanwaltspartnerschaft mbB

(56) Entgegenhaltungen:
- EP-A1- 0 799 730
- EP-A1- 2 689 984
- WO-A1-00/46050
- WO-A2-2006/091547
- DE-U1- 7 606 170
- FR-A1- 2 882 323
- NL-C2- 1 019 255
- US-A- 3 649 048
- US-A- 4 029 333

## Beschreibung

Die vorliegende Erfindung betrifft einen Schleppzug mit einem Schleppfahrzeug und mindestens einem geschleppten Anhänger.

In vielen Bereichen der Intralogistik, insbesondere beim Materialfluss zur Versorgung der Produktion, kommen Schleppzüge zum Einsatz. Ein Schleppzug besteht aus mindestens einem Schleppfahrzeug, das häufig als Standfahrzeug ausgebildet ist aber auch als Sitzfahrzeug ausgebildet sein kann. Ferner besitzt der Schleppzug einen oder mehrere Anhänger, die ohne eigenen Antrieb von dem Schleppfahrzeug geschleppt werden. Bei der Versorgung der Produktion mit Material werden die eingesetzten Schleppzüge auch als Routenzüge bezeichnet, bei denen der oder die Anhänger mit Transporteinheiten, wie beispielsweise Rollpaletten, Innenwagen oder Trolleys beladen sind. Diese in dem Anhänger mitgeführten oder auf diesem gelagerten Transporteinheiten werden mit Hilfe des Routenzugs vom Lager in die Produktion verbracht. Dort verbleiben sie und werden im Laufe des Produktionsprozesses geleert, um dann durch die Routenzüge wieder abgeholt bzw. gegen gefüllte Einheiten ausgetauscht zu werden. Im Vergleich zu den häufig eingesetzten Gabelstaplern ist der Platzbedarf, insbesondere der Gangbreitenbedarf für Schleppzüge, deutlich geringer.

Um den Platzbedarf für einen Schleppzug möglichst gering zu halten, wird besonderes Augenmerk auf die Fahrwerksgeometrie der Anhänger und des Schleppers gelegt. Ein Kriterium hierbei ist die Spurtreue der Schleppzüge, insbesondere bei der Kurvenfahrt. Einfache Schlepper-Anhänger-Systeme haben den Nachteil, dass sie einen großen Hüllflächenbedarf haben, da die kurvenäußere, vordere Ecke des Schleppers den äußeren Hüllkreisradius vorgibt und das hintere Ende des Schleppers und die nachfolgenden Anhänger immer weiter nach innen ziehen und die kurveninnere, hintere Ecke des letzten Anhängers den inneren Hüllradius vorgibt. Auch die Breite des Schleppzuges ist ein wichtiges Kriterium für die Auslegung der Gangbreite der Geradeausfahrt.

Aus EP 2 689 984 A1 ist ein Transportzug mit einem Schleppfahrzeug und einem oder mehreren Anhängern bekannt geworden. Die Anhänger besitzen, bezogen auf ihre Fahrtrichtung, an einer Seite eine Deichsel zur Verbindung mit dem Schleppfahrzeug oder einem vorausfahrenden Anhänger und an ihrer in Fahrtrichtung gegenüberliegenden Seite ein Kupplungsmaul zur Verbindung mit einem angehängten Anhänger.

Aus WO 2006/072684 ist ein Transportanhänger mit einer gekoppelten Lenkung für Vorder- und Hinterachse bekannt geworden.

Aus CH 569 605 ist ein Gliederzug mit einem Zugwagen und Anhängern bekannt geworden, die als Einachswagen ausgebildet sind, die eine Verschwenkung nur um eine vertikale Achse zulassen.

Aus WO 2006/072684 A1 ist ein allradgelenkter Anhänger mit einer Drehschemellenkung an beiden Achsen bekannt geworden. Die über die vordere Deichsel eingebrachte Auslenkung der Vorderachse wird über ein portalförmiges Gestell mit Hilfe von mehreren Lenkstangen auf die hintere Achse übertragen.

Aus EP 1 743 828 B1 ist ein Schleppzug mit einem Anhänger bekannt geworden, der über ein dreirädriges Fahrwerk verfügt. Das Vorderrad und eine verschwenkbare Hinterachse stützen eine Trägerstruktur zur Aufnahme von Paletten.

Aus EP 2 161 182 B1 ist ein einachsig ausgeführter Anhänger bekannt geworden, der einen E-förmigen Rahmen aufweist. Beim Verschwenken der einzelnen Anhänger um eine horizontale Querachse, wie es beispielsweise beim Überfahren an Übergängen von horizontalen zu geneigten Fahrbahnabschnitten auftritt, ist die bekannte Deichselführung nur im begrenzten Rahmen einsetzbar. Der auszugleichende Winkel zwischen den Anhängern ist nur im Rahmen des üblichen Kupplungsspiels auszugleichen, so dass Verspannungen zwischen den Anhängern auftreten.

Aus WO 2016/061547 ist eine Deichsel bekannt, die einen schwenkbare Deichselöse und einen über einen Stift um eine horizontale schwenkbar gelagerte Deichselwurzel besitzt.

Aus US 4,029,333 ist ein Schleppzug mit Anhängern bekannt, die für eine Steigungsfahrt in der Mitte quer zur Längsrichtung geteilt sind.

Der Erfindung liegt die Aufgabe zugrunde, eine Deichsel zur Verbindung von Anhängern bereitzustellen, die eine gute Spurtreue des Schleppzugs und einen Ausgleich zwischen den Fahrzeugen bei Steigungsänderung bietet.

Erfindungsgemäß wird die Aufgabe durch einen Schleppzug mit den Merkmalen aus Anspruch 1 gelöst. Vorteilhafte Ausgestaltungen bilden die Gegenstände der Unteransprüche.

Der erfindungsgemäße Schleppzug weist ein Schleppfahrzeug und mindestens einen geschleppten Anhänger auf. Innerhalb des Schleppzuges sind mindestens ein Schleppfahrzeug und ein Anhänger oder zwei Anhänger untereinander über eine mehrteilige Deichsel miteinander verbunden. Die mehrteilige Deichsel weist einen ersten Deichselabschnitt und einen zweiten Deichselabschnitt auf, die jeweils an ihrem zu dem Anhänger oder dem Schleppfahrzeug weisenden Ende mit diesem gekoppelt sind. Die beiden mit dem schleppenden und dem geschleppten Fahrzeug verbundenen Deichselenden sind um eine erste Achse schwenkbar oder starr mit den Fahrzeugen verbunden. Die zueinander weisenden Enden der Deichselabschnitte, mit denen der erste Deichselabschnitt mit dem zweiten Deichselabschnitt verbunden ist, sind miteinander schwenkbar gekoppelt, wobei die Schwenkachse vertikal steht.

Erfindungsgemäß ist eine zweite Schwenkachse vorgesehen, die sich in Deichselrichtung erstreckt. Der mehrteilige Aufbau der Deichsel mit mindestens zwei Schwenkachsen, wobei eine Achse senkrecht zum Untergrund und eine Achse in Deichsellängsrichtung verläuft, erlaubt es den Anhängern, sowohl spurtreu der vorgegebenen Kurve zu folgen als auch Unebenheiten im Untergrund auszugleichen. Insbesondere seitliche Neigungsbewegungen können durch die zweite Schwenkachse ausgeglichen werden.

In einer bevorzugten Ausgestaltung ist der erste Deichselabschnitt mit einer Kupplungsgabel und der zweite Deichselabschnitt mit einer Befestigungsbohrung zur Verbindung mit der Kupplungsgabel ausgebildet. Die Kupplungsgabel ist dabei bevorzugt an dem ersten Deichselabschnitt um die zweite Achse drehbar gelagert. Durch diese Verbindung im Rahmen der mehrteiligen Deichsel wird mit Hilfe der Kupplungsgabel wieder ein Lager für die Aufnahme eines Bolzens geschaffen. Die Orientierung des Bolzens gibt dabei die zweite Drehachse vor. Der Bolzen kann lösbar oder unlösbar in der Kupplungsgabel angeordnet sein.

In einer bevorzugten Ausgestaltung sind an dem Schleppfahrzug und an mindestens einem der Anhänger ein Paar von Befestigungsflanschen zur Verbindung mit einem der Deichselabschnitte vorgesehen, wobei die beiden Deichselabschnitte jeweils einen rohr- oder ösenförmigen Befestigungsabschnitt aufweisen, der mit einem Bolzen zwischen den Befestigungsflanschen gekoppelt werden kann. Die zu dem Schleppfahrzeug bzw. Anhängern weisenden äußeren Enden der mehrteiligen Deichsel sind über eine Ösen-Bolzen-Verbindung gekoppelt. Hierbei kann die Verbindung schwenkbar ausgebildet sein, so dass an der Verbindung zwischen Fahrzeug und Deichsel eine Schwenkachse vorliegt. In der bevorzugten Ausgestaltung ist die Schwenkachse, die an der Verbindung der Deichsel mit dem Fahrzeug vorliegt, horizontal angeordnet, während die zwischen den beiden Deichselabschnitten befindliche Achse vertikal angeordnet ist. Die fahrzeugnahen horizontalen Achsen dienen einem Ausgleich bei der Steigungsfahrt, während die vertikal angeordnete Achse der Kurvenfahrt dient. Die alternative Ausgestaltung mit einer nicht schwenkbaren Verbindung zwischen Deichsel und Fahrzeug hat den Vorteil, dass auch einachsige Anhänger stabil über eine gelenkte Deichsel stehen können.

In einer bevorzugten Ausgestaltung ist mindestens einer der Anhänger mit drei Achslinien ausgestattet, von denen eine mittlere Achslinie mittig zwischen den mittleren Kuppelpunkten der mit dem Anhänger verbundenen Deichselabschnitte liegt. Die mittlere Achslinie wird beispielsweise durch ungelenkte Räder an dem Anhänger gebildet. Die beiden anderen Achslinien werden beispielsweise durch Schwenkrollen gebildet. Für eine gute Spurtreue ist es wichtig, dass die mittlere Achslinie mittig zwischen den mittleren Kuppelpunkten mit einer vertikalen Drehachse zu den benachbarten Anhängern liegt.

Bevorzugt kann bei einem Anhänger, der mit nur einer Achslinie ausgeführt ist, diese mittig zwischen den mittleren Kuppelpunkten der mit dem Anhänger verbundenen Deichselabschnitte ausgeführt sein. Die Achslinie kann beispielsweise durch zwei seitlich an dem Anhänger liegende ungelenkte Räder gebildet werden. Eine Stabilität ergibt sich in diesem Fall nur bei einer paarweisen Verwendung von Anhängern, die untereinander mit Deichseln ohne Neigachse verbunden sind. Der Deichsel fehlt eine Neigachse, wenn, wie vorstehend erläutert, eine nicht schwenkbare Kopplung oder Verbindung zwischen Deichsel und Fahrzeug vorliegt. An das Anhängerpaar kann beispielsweise über eine Neigachse ein weiteres Anhängerpaar gekoppelt werden, deren Anhänger wiederum untereinander mit Deichseln ohne Neigachsen verbunden sind.

In einer weiteren Ausgestaltung kann auch eine Drehschemellenkung für den Anhänger vorgesehen sein, bei der zwei einander gegensinnig gekuppelte Drehschemel vorgesehen sind, die jeweils zur Verbindung mit den Deichselabschnitten vorgesehen sind. Bei dieser Ausgestaltung wird eine Drehbewegung über einen Deichselabschnitt an die zugehörige Achse des Anhängers geliefert, von wo sie über die Kupplung auf die andere Achse und den dieser Achse zugeordneten Deichselabschnitt übertragen wird.

Vorteilhafte Ausgestaltungen der Erfindung werden nachfolgend anhand von Ausführungsbeispielen erläutert. Es zeigen:
- Fig. 1: eine Seitenansicht eines beispielhaften Schleppzuges mit einer mehrteiligen Deichsel,
- Fig. 2: eine Draufsicht auf den Schleppzug aus Fig. 1,
- Fig. 3: eine Draufsicht auf eine mehrteilige Deichsel,
- Fig. 4: eine Schnittdarstellung zu der mehrteiligen Deichsel,
- Fig. 5: eine Draufsicht auf einen Schleppzug mit dreiachsigen Anhängern und mehrteiligen Deichseln bei stationärer Kreisfahrt,
- Fig. 6: eine Seitenansicht und Draufsicht eines Drehschemel-gelenkten Plattformanhängers mit einer mehrteiligen Deichsel,
- Fig. 7: eine Draufsicht auf ein Schleppfahrzeug mit Drehschemel-gelenkten Plattformanhängern und mehrteiligen Deichseln bei stationärer Kreisfahrt,
- Fig. 8: einen einachsigen Anhänger in der Ansicht von der Seite,
- Fig. 9: einen Schleppzug mit mehreren einachsigen Anhängern,
- Fig. 10: mehrere Ansichten zu einer mehrteiligen, nicht schwenkbaren Deichsel,
- Fig. 11: einen Schleppzug mit einem Anhängerpaar einer mehrteiligen Deichsel,
- Fig. 12: den Anhängerzug aus Fig. 11 bei einer anderen Deichselkombination,
- Fig. 13: eine Detailansicht zu den um ihre Längsachse drehbar gelagerten Deichselabschnitten, und
- Fig. 14: eine Übersichtsform zu unterschiedlichen Bauweisen der Deichsel.

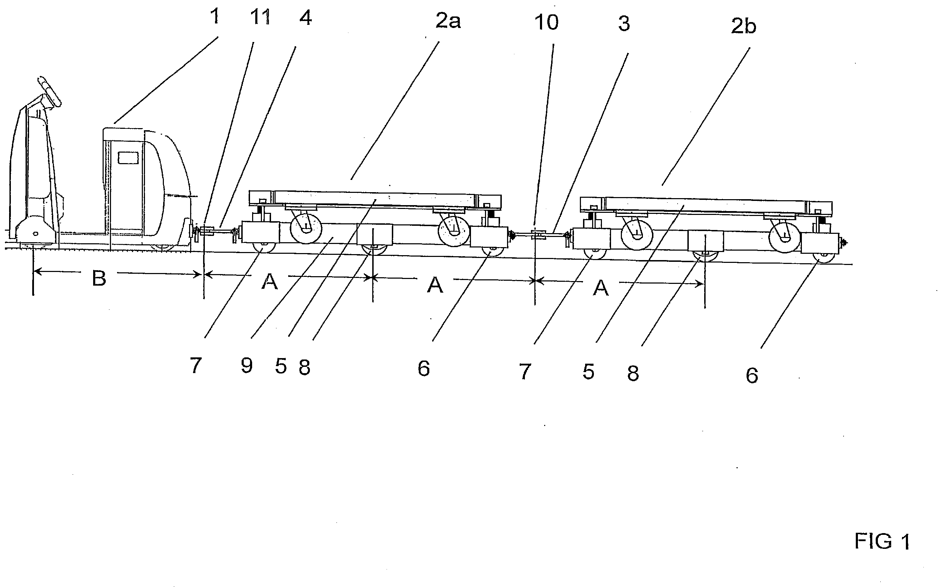

Fig. 1 zeigt eine Seitenansicht eines beispielhaften Schleppzuges, bestehend aus einem heckgelenkten Schlepper 1 und zwei Anhängern 2a, 2b. Die Anhänger transportieren einen Innenwagen 5 in einer angehobenen Position. Die Anhänger 2a, 2b sind mit einer mehrteiligen Deichsel 3 ausgerüstet und über diese miteinander verbunden.

Jeder der Anhänger 2a, 2b besitzt drei Achslinien, von denen eine vordere Achslinie mit Schwenkrollen 7, eine mittlere Achslinie mit zwei ungelenkten Führungsrädern 8 und eine hintere Achslinie mit Schwenkrollen 6 ausgestattet ist. Die Anordnung und der Abstand der Achslinien ist dabei so gewählt, dass die Aufstandsfläche der mittleren Führungsrolle 8 weiter unten von einem Grundrahmen 9 des Anhängers entfernt ist als die Aufstandsfläche der Schwenkrollen 7. Hierdurch wird erreicht, dass die Führungsräder 8 der mittleren Achse immer Bodenkontakt haben, während auf unebenem Untergrund eine der beiden äußeren Achslinien den Bodenkontakt verliert. Es entsteht hierdurch eine minimale Kippbewegung des Anhängers. Wie in Fig. 1 dargestellt, besitzen die Räder der hinteren Achslinie 6 keinen Bodenkontakt. Die Höhendifferenz der Aufstandsflächen ist hierbei in Abhängigkeit von den Einsatzverhältnissen, wie beispielsweise unebenes Gelände, Steigungsknicke und dergleichen festzulegen. Zwischen den Anhängern 2a und 2b ist eine mehrteilige Deichsel 3 angeordnet, die eine vertikale Gelenkachse 10 für die Kurvenfahrt besitzt.

Das Ausführungsbeispiel gemäß Fig. 1 zeigt ebenfalls eine erfindungsgemäße Deichsel 4, die zwischen dem Schlepper 1 und dem ersten Anhänger 2a angebracht ist. Die Schwenkachse 11 der Deichsel 4 verläuft ebenfalls vertikal. Die Verwendung der Deichsel 4 erfolgt abhängig von der Bauform des Schleppers. Der Abstand B des Schleppers, der zwischen der Vorderachse des Schleppers und dem Kupplungspunkt hinter dem Schlepper definiert ist, ist bei einer gelenkten Hinterachse nach Möglichkeit genauso groß wie der Abstand A zwischen dem Kupplungspunkt der Deichsel 4 und der mittleren Achslinie der ungelenkten Führungsräder 8 an dem Anhänger.

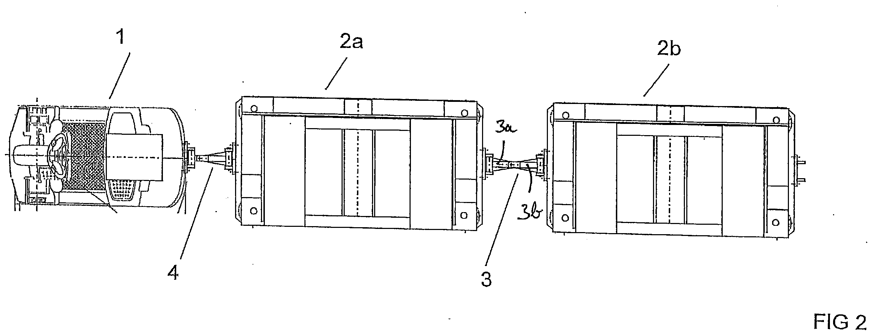

Fig. 2 zeigt eine Draufsicht auf den Schleppzug gemäß Fig. 1 mit dem Schlepper 1, den Anhängern 2a, 2b sowie der mittig zur Fahrzeugquerrichtung angeordneten mehrteiligen Deichsel 3 sowie der Deichsel 4 zwischen Anhänger 2a und Schlepper 1. Wie in Fig. 2 zu erkennen, ist die mehrteilige Deichsel 3 aus einem ersten Deichselabschnitt 3a und einem zweiten Deichselabschnitt 3b aufgebaut. Die Deichsel 4 kann hierbei baugleich mit jeweils einem Deichselabschnitt ausgebildet sein, so dass die Reihung der Anhänger innerhalb des Schleppzuges beliebig ist. Allerdings setzt dies immer voraus, dass die Abstände A und B zwischen Kuppelpunkten und Achsen gleich sind, so wie nachfolgend noch erläutert wird. Sollte diese Bedingung nicht mit baugleichen Deichselabschnitten eingehalten werden können, so kann die Deichsel 4 auch eine speziell angepasste Länge zur Einhaltung der Bedingung von gleichen Abständen A und B erhalten.

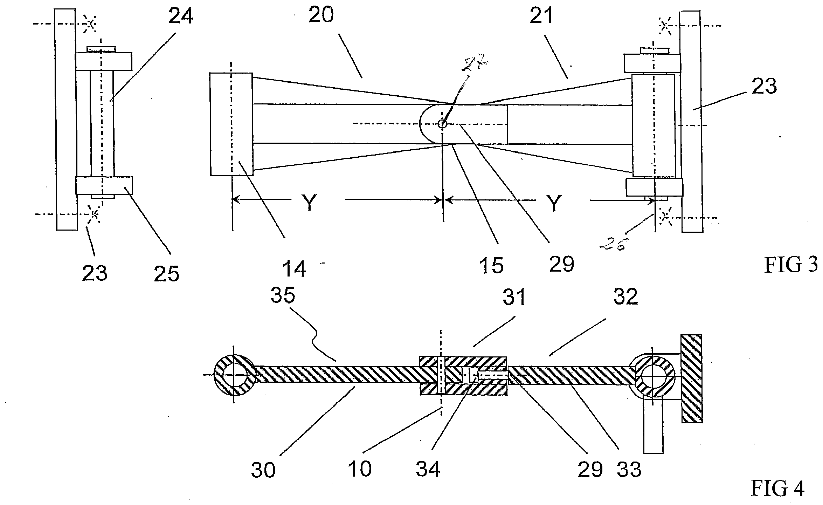

Fig. 3 zeigt eine Draufsicht auf eine mehrteilige Deichsel 3, die aus zwei Deichselabschnitten 20 und 21 besteht. Zur Verbindung der Fahrzeuge über die mehrteilige Deichsel 3 mit den Deichselabschnitten 20 und 21 ist jeweils eine Halterung 23 vorgesehen, an der eine Lagerhülse oder eine Lageröse 14 über einen Bolzen 24 schwenkbar befestigt werden kann. Zur besseren Übersicht ist in Fig. 3 der Deichselabschnitt 21 mit einer an dem Grundrahmen 9 angebrachten Halterung 23 verbunden. Auf der linken Seite ist zu erkennen, dass der Deichselabschnitt 20 noch nicht mit der Halterung 23 verbunden ist. Bei der Verbindung fällt die Achse 26 mit der Öffnung der mehrteiligen Deichsel und insbesondere mit deren Lagehülse 14 zusammen.

Mittig besitzen die beiden Deichselabschnitte 20 und 21 eine Kupplung über einen Bolzen 27. Der Bolzen 27 bildet ein Gelenk zwischen den Deichselabschnitten. Erzielt wird die mittlere Kupplung über eine Kupplungsgabel 31, in die das mittige Ende des Deichselabschnitts 20 mit seiner Kupplungsbohrung eingeführt wird. Es entsteht eine fluchtende Bohrung zwischen der Kupplungsgabel 31 und dem Deichselabschnitt 20, die den Bolzen 27 aufnehmen kann. Der Bolzen 27 ist in Fig. 3 lediglich schematisch dargestellt und kann mit einer Sicherung, zumindest einer Verliersicherung, ausgestattet sein.

Die Halterung 23 weist einen Bolzen 24 auf, der zwischen zwei Laschen 25 gelagert ist. Die als Lagerhülsen 14 ausgebildeten fahrzeugseitigen Enden der Deichselabschnitte 20, 21 können zwischen den Laschen 25 angeordnet werden und durch den Bolzen 24 gesichert werden. Wie aus der Draufsicht ersichtlich, ist die Längsrichtung und damit die Verschwenkrichtung zwischen Bolzen und Deichselabschnitt horizontal angeordnet, so dass ein Höhenausgleich um die horizontale Achse erfolgen kann. Der Bolzen in der mittigen Kupplung zwischen den Deichselabschnitten ist sodann vertikal angeordnet und gestattet eine Lenkbewegung zwischen den Halterungen bzw. zwischen schleppendem und geschlepptem Fahrzeug.

Die Ausgestaltung der mehrteiligen Deichsel ist in Fig. 4 in einer Schnittdarstellung gezeigt. Hierbei ist eine Kupplungsgabel 31 als separates Bauteil an dem Deichselabschnitt 32 gelagert. Die Kupplungsgabel 31 wird über einen Bolzen 34 drehbar um eine Längsachse 29 an dem Deichselabschnitt 32 gelagert. Die Kupplungsgabel 31 ist über eine Bolzenverbindung verschwenkbar mit dem Deichselabschnitt 30 verbunden. Der weitere Freiheitsgrad, mit dem sich die Kupplungsgabel 31 um die Längsachse 29 drehen kann, gestattet es, bei einer Fahrt mit Bodenknicken seitliche Kippbewegungen zwischen den Anhänger auszugleichen, ohne dass Spannungen zwischen den Fahrzeugen auftreten.

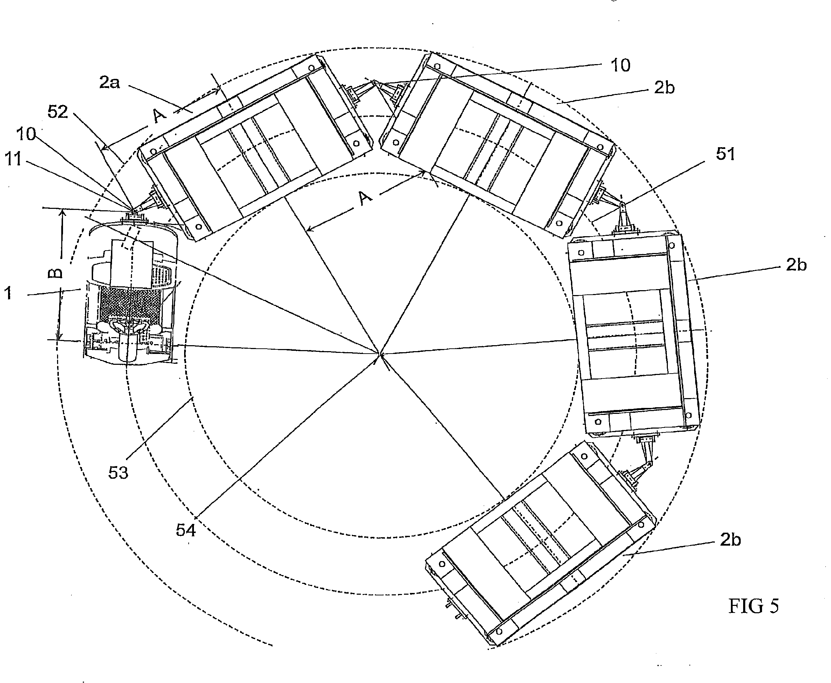

Fig. 5 zeigt eine Draufsicht auf einen Schleppzug, der aus vier Anhängern 2a, 2b mit jeweils drei Achslinien besteht. Die mittlere Achslinie wird von ungelenkten Rollen gebildet, die beispielsweise auf einer Starrachse angeordnet sind. Das Schleppfahrzeug ist wieder als ein heckgelenkter Schlepper 1 ausgebildet. In stationärer Kreisfahrt ergibt sich ein die Hüllfläche begrenzender äußerer Kreis 52, der durch die äußeren Ecken der Anhänger beschrieben wird. Auf einer konzentrischen Kreisbahn 51 laufen die Mittelpunkte der mittleren Achsen. Ein Innenkreis 53 wird in diesem Fall durch die Seitenflächen der Anhänger 2a, 2b bzw. der aufgenommenen Last beschrieben. Für den Fall, dass der Abstand B zwischen der starren Vorderachse des Schleppers 1 und dem hinteren Kuppelpunkt 11 dem Abstand A der mittleren Achse und den Kuppelpunkten 10 der Anhänger entspricht, bewegt sich auch die Mitte der starren Vorderachse des Schleppers auf der Kreislinie 51. Der Mittelpunkt der genannten Kreise bzw. der Kreisbahn ist der Punkt 54, auf den die Radachsen aller Anhänger des Schleppzuges gerichtet sind und der somit den Momentanpol für die Kreisfahrt aller Anhänger und des Schleppers bildet.

Eine gleiche Hüllfläche ergibt sich, wenn die Anhänger mit nur einer mittleren, starren Achslinie und den erfindungsgemäßen Deichseln ausgerüstet sind. Werden kleinere Kurvenradien erforderlich, so muss die Deichsellänge entsprechend vergrößert werden, um eine Kollision der Fahrzeugkonturen zu vermeiden. Anhänger mit einer mittleren, starren Achslinie werden bevorzugt paarweise verwendet, um eine Kippbewegung der Anhänger zu verhindern.

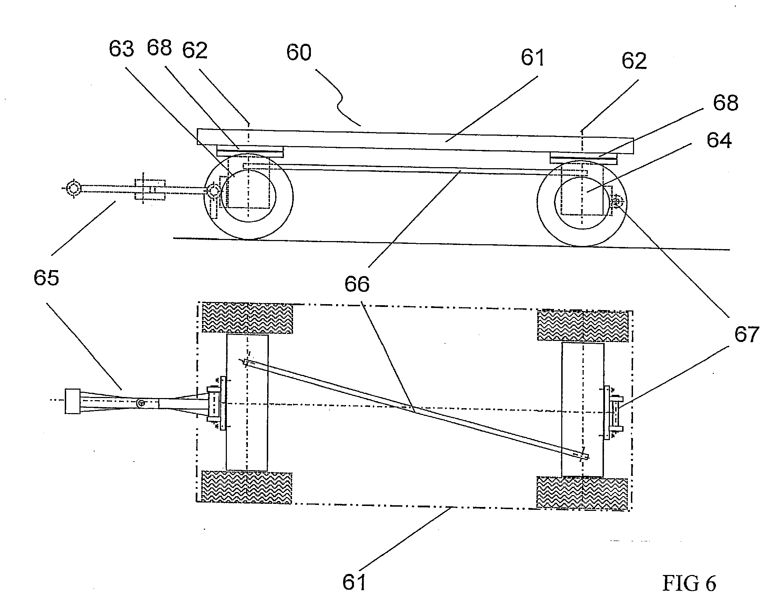

Fig. 6 zeigt eine Ansicht und eine Draufsicht auf einen Plattformanhänger 60 mit Allradlenkung, der an seinen Drehschemel-gelenkten Achsen 63, 64 jeweils mit einer mehrteiligen Deichsel ausgerüstet ist. Die Achsen 63, 64 sind über eine sogenanntes Drehlager 68 mit dem eigentlichen Plattformrahmen 61 drehbar um eine Vertikalachse 62 verbunden. Zur Übertragung der gegensinnigen Lenkbewegung stehen die beiden Achsen 63, 64 über eine Koppelstange 66, die an den Achsen drehbar gelagert ist, in Wirkverbindung. An der vorderen Achse 63 ist die mehrteilige Deichsel 65, wie bereits beschrieben, um eine horizontale Querachse drehbar gelagert, an der hinteren Achse ist eine Halterung 67 zur Verbindung mit einer anderen mehrteiligen Deichsel vorgesehen.

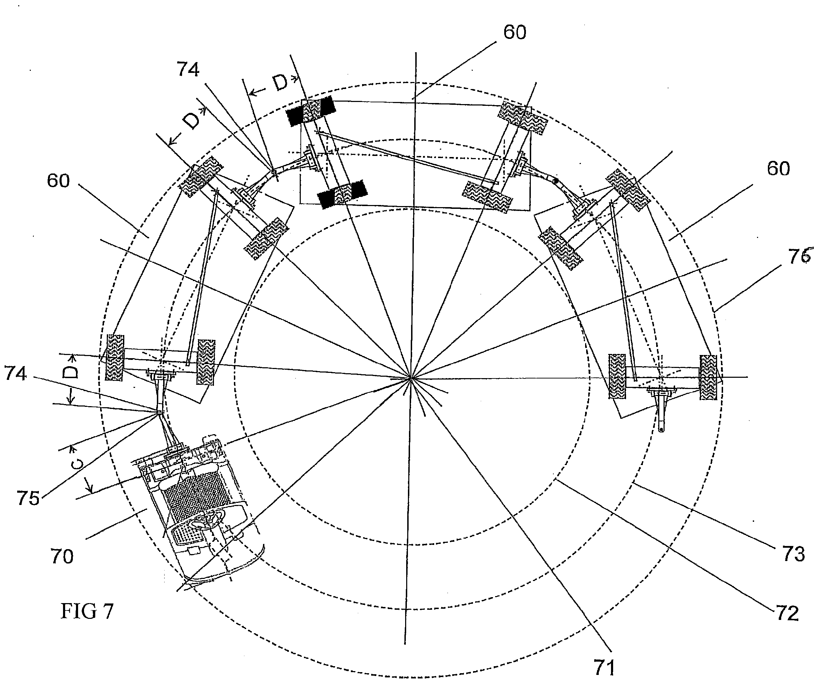

Fig. 7 zeigt eine Draufsicht auf einen Schleppzug, der aus drei Drehschemel-gelenkten Anhängern 60 mit einem frontgelenkten Schlepper 70 besteht. In der stationären Kreisfahrt ergibt sich ein die Hüllfläche begrenzender äußerer Kreis 76, der von den äußeren Ecken der Anhänger beschrieben wird. Auf einer Kreisbahn 73 bewegen sich die Mitten der Achsen aller Anhänger. Ein die Hüllfläche begrenzender Innenkreis 72 wird durch die Seitenflächen der Anhänger definiert. Für den Fall, dass der Abstand C zwischen der starren Hinterachse des Schleppers 70 und seinem hinteren Kuppelpunkt 75 dem Abstand D zwischen der Achsmitte und dem Kuppelpunkt 74 der Anhänger entspricht, bewegt sich auch die Mitte der starren Hinterachse des Schleppers auf der Kreisbahn 73. Der Mittelpunkt der genannten Kreise bzw. der Kreisbahn ist der Punkt 71, auf den die Radachsen aller Räder des Schleppzuges gerichtet sind und der somit den Momentanpol für alle Fahrzeuge des Schleppzuges bildet.

Aus Fig. 7 ist ersichtlich, dass bei Drehschemel-gelenkten Anhängern mit Allradlenkung der frontgelenkte Schlepper vorteilhaft ist, da die Abstand C und D zwischen der Achsmitte der Starrachse und dem Kuppelpunkt relativ klein sind, was bei heckgelenkten Schleppern nur schwer erreicht werden kann.

Fig. 1 zeigt einen Schleppzug mit zwei Anhängern, die drei Achslinien aufweisen. Die Kopplung erfolgt über die Deichseln 3 und 4. Dieser Schleppzug kann durch Abkoppeln des Anhängers 2b gekürzt werden oder durch weitere Anhänger 2b unter Verwendung einer entsprechenden Anzahl Deichseln 3 erweitert werden.

Bei dem aus dem Stand der Technik bekannten Einsatz von Anhängern mit einer Achslinie werden jeweils zwei Anhänger über eine Deichsel mit nur einer vertikalen Achse zu einem (knick-gelenkten) Anhängerpaar gekoppelt, das dann für sich allein stabil steht. In der bekannten Technologie ist es nicht möglich, einen dritten Anhänger mit der gleichen Deichsel anzukoppeln, ohne dass das System dann statisch überbestimmt wird. Es ist allerdings möglich, ein zweites, statisch bestimmtes Anhängerpaar über eine Deichsel mit einer Neigachse zwischen Deichsel und Fahrzeug anzukoppeln. Hierdurch sind Schleppzüge konfigurierbar, die allerdings immer nur eine gerade Anzahl von Anhängern aufweisen. Im Rahmen der intralogistischen Prozesse ist es jedoch von elementarer Wichtigkeit, dass Schleppzüge, die aus einem Schlepper und Anhängern mit nur einer Achslinie gebildet werden, auch mit einer ungeraden Zahl von Anhängern betrieben werden können.

Hierzu wird im Weiteren ein Deichsel-System oder ein Deichsel-Baukasten beschrieben, das/der die bereits beschriebenen Deichseln 3, 4, 35 um weitere Ausführungen für Anhänger mit nur einer Achslinie ergänzt.

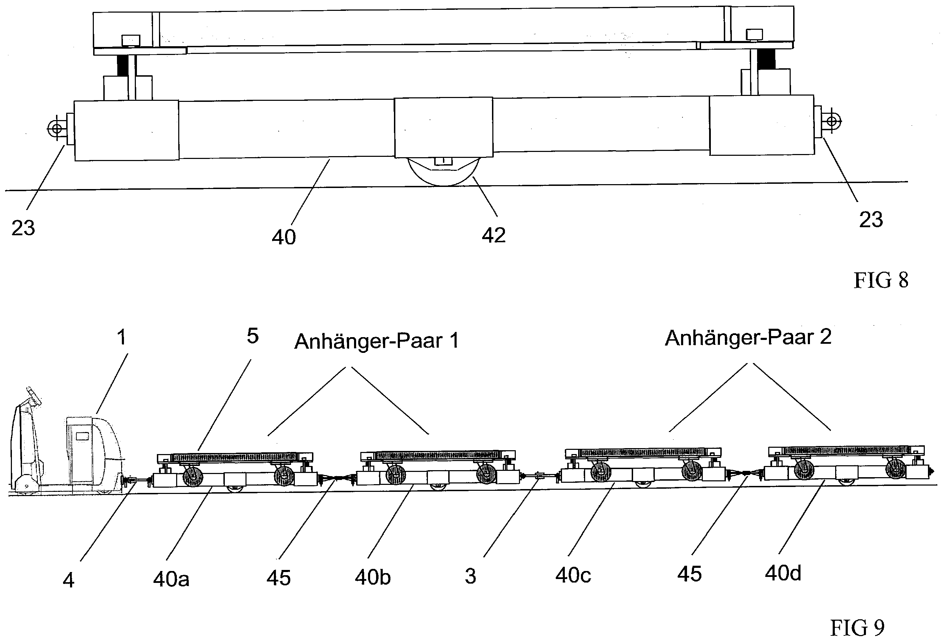

Als Basis für eine Deichsel-System oder einen Deichsel-Baukasten dient die Halterung 23 mit den Laschen 25 nach Fig. 3, die an die Rahmen der Anhänger 2a, 2b bzw. die Achsen 63, 64 der Drehschemel-gelenkten Anhänger 60 geschraubt oder geschweißt ist. Diese ist in gleicher Weise nach Fig. 8 an vorderen und hinteren Querträger des Rahmens des Anhängers 40, der nur eine Achslinie 42 aufweist, befestigt.

Fig. 9 zeigt einen Schleppzug, der aus dem Schlepper 1 und den einachsigen Anhängern 40a, 40b, 40c, 40d besteht. Die Anhänger 40a, 40b und die Anhänger 40c, 40d bilden jeweils unter Verwendung einer erfindungsgemäßen Deichsel 45 ein statisch bestimmtes Anhängerpaar, das über eine erfindungsgemäße Deichsel 3 an das vorlaufende Anhängerpaar oder über eine erfindungsgemäße Deichsel 4 an den Schlepper gekoppelt wird. Die Anhänger sind beispielsweise mit unbeladenen Innenwagen 5 beladen.

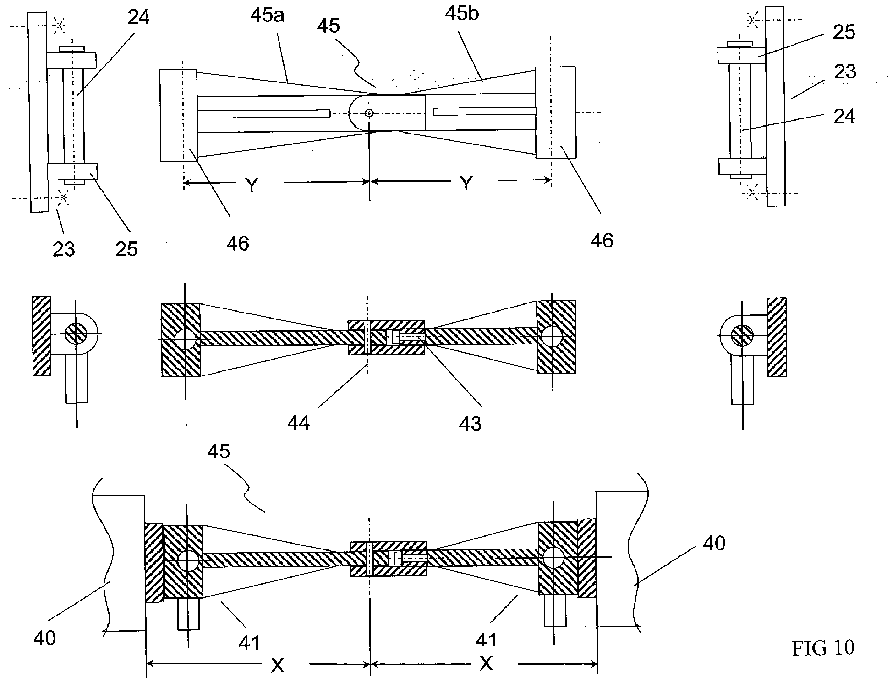

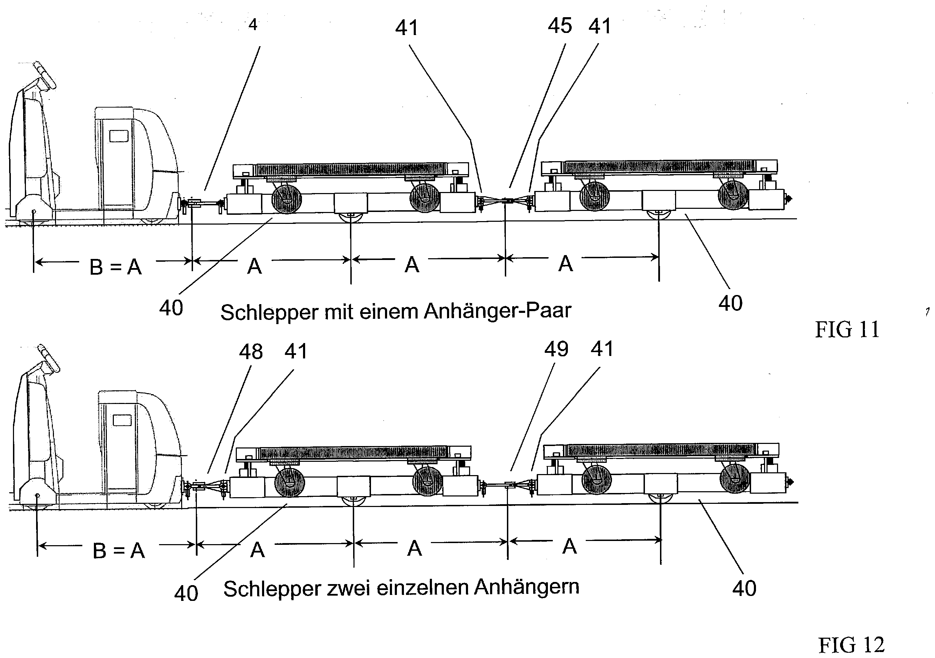

Einen Bauform der Deichsel 45, die keine horizontale Neigung zwischen der Deichsel und dem Fahrzeug zulässt, ist in Fig. 10 dargestellt, die analog zur Deichsel 35 nach Fig. 4 aus zwei Deichselteilen 45a, 45b besteht. Der Unterschied besteht in den Endstücken 46, die so ausgebildet sind, dass sie in Verbindung mit den beidseitig dargestellten Halterungen 23 ein gesperrtes Horizontalgelenk 41 bilden, wie es im unteren Teilbild der Fig. 10 in einem Längsschnitt gezeigt ist. In der Mitte der Fig. 10 ist ein Längsschnitt im nicht gekoppelten Zustand gezeigt. Die beschriebene Ausführungsform der Deichsel lässt eine Relativbewegung der beiden einachsigen Anhänger 40 nur um die Längsachse 43 und die Vertikalachse 44 zu. Das Anhängerpaar ist somit statisch bestimmt und "geländegängig"; es kann paarweise an- bzw. abgekoppelt werden. Dies ist in Fig. 11 erläuternd dargestellt, wobei die Strecken A, B jeweils den Abstand zwischen den starren Achsen und den Kuppelpunkten des Schleppzuges bezeichnen.

Durch Austausch der in Fig. 11 gezeigten Deichseln 4, 45 ergibt sich ein in Fig. 12 gezeigter Schleppzug mit zwei einzelnen Anhängern, die einzeln gekoppelt werden können, ohne die Stabilität des verbleibenden Schleppzuges zu beeinflussen, da die jeweils zu den Anhängern weisenden Horizontalgelenke 41 der Deichseln 48, 49 gesperrt sind.

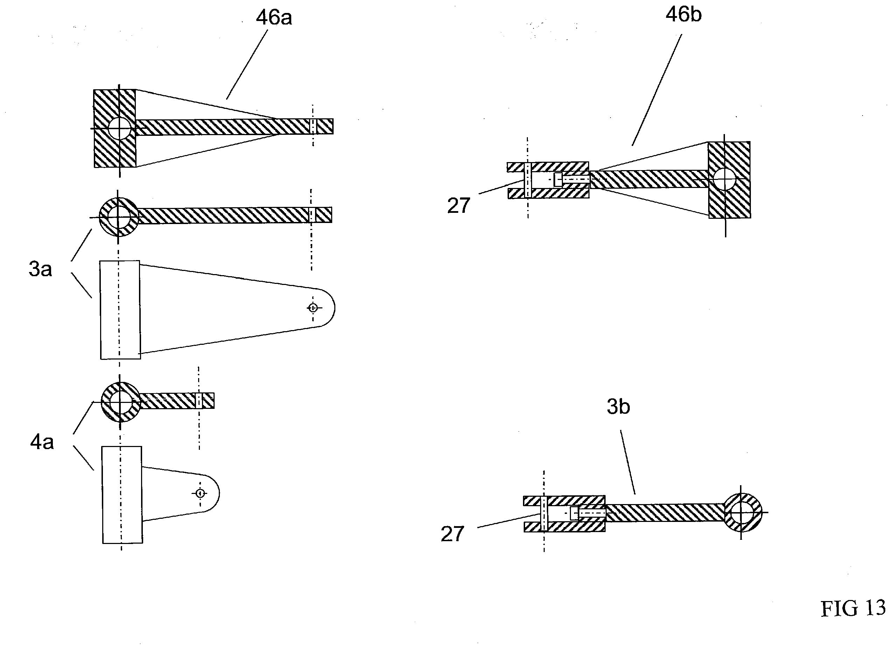

Fig. 13 zeigt die Elemente des erfindungsgemäßen Deichsel-Systems, das aus den bereits beschriebenen Bauteilen 3a, 3b, 4a, 46a, 46b besteht. Die Elemente 3a, 4a sind auch in der Draufsicht gezeigt. Um die Kombination der genannten Elemente zu den einzelnen Deichselbauformen einfach zu ermöglichen, ist der Bolzen 27 lösbar mit den Deichselteilen 3b bzw. 46b verbunden. Die Deichselteile 46a, 46b sind dabei jeweils die nicht horizontal schwenkbaren Deichselteile.

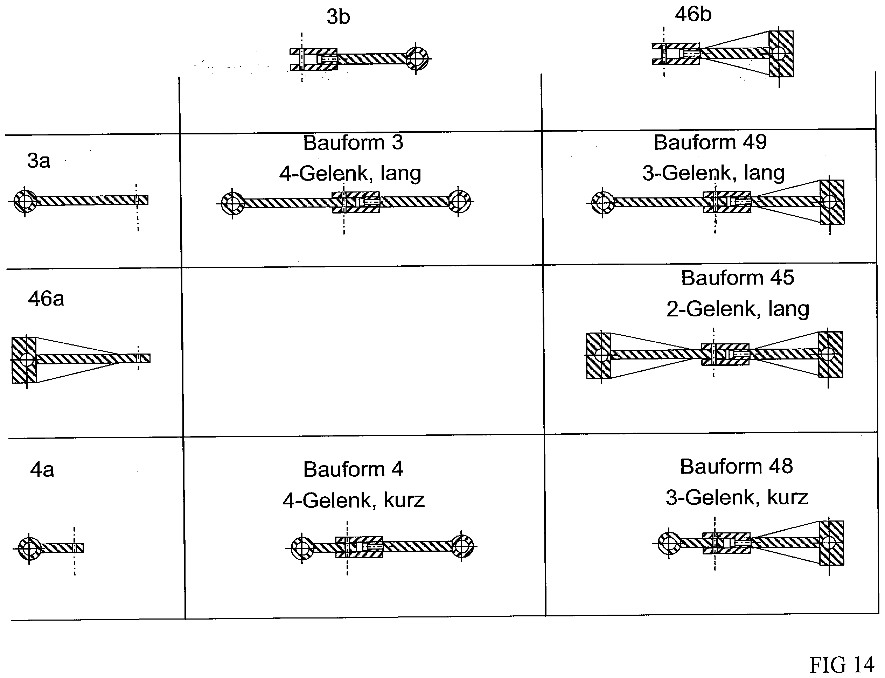

Fig. 14 zeigt zur Erläuterung eine Kombinationsmatrix der genannten Deichselelemente. Sowohl die Elemente der Matrix als auch die möglichen Kombinationen sind dargestellt. Die Kombination der Elemente 46a und 3b ergibt den gleichen Funktionsumfang wie die Kombination der Elemente 3a und 46b.

Folgende Zuordnungen finden sich in der Kombinationsmatrix aus Fig. 14:

| | |
|---|---|
| Bauform 3 | Kopplung von statisch stabilen Anhängern mit zwei oder mehr Achslinien und statisch stabilen Anhängerpaaren mit jeweils nur einer Achslinie untereinander, |
| Bauform 4 | Kopplung von statisch stabilen Anhängern mit zwei oder mehr Achslinien und statisch stabilen Anhängerpaaren mit jeweils nur einer Achslinie zum Schlepper, |
| Bauform 45 | Kopplung von Anhängern mit nur einer Achslinie zu einem statisch stabilen Anhängerpaar untereinander, |
| Bauform 48 | Kopplung von Anhängern mit nur einer Achslinie zum Schlepper, |
| Bauform 49 | Kopplung von Anhängern mit nur einer Achslinie untereinander. |

Durch die Nutzung des erfindungsgemäßen Deichsel-Systems lassen sich sowohl Anhänger mit zwei und mehr Achslinien 2a, 2b als auch Anhänger mit nur einer Achslinie 40 in einem Schleppzug beliebig miteinander kombinieren.

### Bezugszeichenliste

- 1: Heckgelenkter Schlepper
- 2a: Anhänger
- 2b: Anhänger
- 3: Deichsel
- 3a: erster Deichselabschnitt
- 3b: zweiter Deichselabschnitt
- 4: Deichsel
- 5: Innenwagen
- 6: Schwenkrolle / Räder der hinteren Achslinie
- 7: Schwenkrolle / Räder der vorderen Achslinie
- 8: Führungsrolle
- 9: Grundrahmen
- 10: vertikale Gelenkachse / Kuppelpunkt Anhängerdeichsel
- 11: vertikale Gelenkachse / Kuppelpunkt Schlepperdeichsel
- 14: Lageröse
- 20: Deichselabschnitt
- 21: Deichselabschnitt
- 23: Halterung
- 24: Bolzen
- 25: Laschen / Befestigungsflansch
- 26: Achse
- 27: Bolzen
- 29: Längsachse
- 30: Deichselabschnitt
- 31: Kupplungsgabel
- 32: Deichselabschnitt
- 34: Bolzen
- 35: mehrteilige Deichsel
- 40: Anhänger mit einer Achslinie
- 41: gesperrtes Horizontalgelenk
- 42: Achslinie
- 43: Längsachse
- 44: Vertikalachse
- 45: Deichsel
- 45a,b: Deichselabschnitte
- 46: Endstück
- 46a,b: Deichselabschnitte
- 48: Schlepperdeichsel
- 49: Anhängerdeichsel
- 51: konzentrische Kreisbahn
- 52: äußerer Kreis
- 53: Innenkreis
- 54: Punkt
- 60: Plattformanhänger
- 61: Plattformrahmen
- 62: Vertikalachse
- 63: Drehschemel-gelenkte Achse
- 64: Drehschemel-gelenkte Achse
- 65: Deichsel
- 66: Koppelstange
- 67: Halterung
- 68: Drehlager
- 70: frontgelenkter Schlepper
- 71: Punkt
- 72: Innenkreis
- 73: Kreisbahn
- 74: äußerer Kreis / Kuppelpunkt
- 75: hinterer Kuppelpunkt
- 76: äußerer Kreis

## Patentansprüche

1. Schleppzug mit einem Schleppfahrzeug (1) und mindestens einem geschleppten Anhänger (2a, 2b), wobei zwei Anhänger (2a, 2b)über eine mehrteilige Deichsel (3) miteinander verbunden sind, die mehrteilige Deichsel (3) weist einen ersten Deichselabschnitt (32) und einen zweiten Deichselabschnitt (30) auf, die an den zueinander weisenden Enden um eine vertikale Achse (10) schwenkbar aneinander gekoppelt sind, **dadurch gekennzeichnet, dass** der erste Deichselabschnitt (32) eine Kupplungsgabel (31) und der zweite Deichselabschnitt (30) eine Befestigungsbohrung zur Verbindung mit der Kupplungsgabel (31) aufweist und die Kupplungsgabel (31) an dem ersten Deichselabschnitt (32) um eine zweite Achse (29) drehbar gelagert ist, die sich in Deichsellängsrichtung horizontal erstreckt, wobei an dem Schleppfahrzeug (1) und mindestens einem der Anhänger (2a, 2b) ein Paar von Befestigungsflanschen (25) zur Verbindung mit einem Deichselabschnitt (30, 32) vorgesehen ist und die beiden Deichselabschnitte (30, 32) jeweils einen rohr- oder ösenförmigen Befestigungsabschnitt aufweisen, der mit einem Bolzen (27) zwischen den Befestigungsflanschen (25) gekoppelt werden kann und die Befestigungsabschnitte um eine horizontale Achse (26) schwenkbar zwischen den Befestigungsflanschen (25) gekoppelt sind.

2. Schleppzug nach Anspruch 1, **dadurch gekennzeichnet, dass** mindestens einer der Anhänger (2a, 2b) drei Achslinien (43) aufweist, von denen eine mittlere Achslinie mittig zwischen den mittleren Kupplungspunkten der mit dem Anhänger verbundenen Deichselabschnitte (45a, 45b) liegt.

3. Schleppzug nach Anspruch 1 oder 2, **dadurch gekennzeichnet, dass** mindestens einer der Anhänger eine Achslinie aufweist, die mittig zwischen den mittleren Kupplungspunkten der mit dem Anhänger verbundenen Deichselabschnitte liegt.

4. Schleppzug nach einem der Ansprüche 1 bis 3, **dadurch gekennzeichnet, dass** mindestens einer der Anhänger (60) zwei miteinander gegensinnig gekoppelte Drehschemellenkungen (63, 64) aufweist, die jeweils zur Verbindung mit den Deichselabschnitten vorgesehen sind.

## Claims

1. Trailer train with a towing vehicle (1) and at least one towed trailer (2a, 2b), wherein two trailers (2a, 2b) are connected to one another by a multi-part drawbar (3), the multi-part drawbar (3) has a first drawbar section (32) and a second drawbar section (30) which are coupled to one another at the ends facing one another so as to be pivotable about a vertical axis (10), **characterized in that** the first drawbar section (32) has a coupling fork (31) and the second drawbar section (30) has a mounting bore for connection to the coupling fork (31) and the coupling fork (31) is mounted on the first drawbar section (32) so as to be rotatable about a second axis (29), which extends horizontally in the longitudinal direction of the drawbar, wherein a pair of mounting flanges (25) for connecting to one of the drawbar sections (30, 32) is provided on the towing vehicle (1) and at least one of the trailers (2a, 2b), and the two drawbar sections (30, 32) each have a tubular or eyelet shaped mounting portion which can be coupled with a bolt (27) between the mounting flanges (25) and the mounting portions are coupled between the mounting flanges (25) so as to be pivotable about a horizontal axis (26).

2. Trailer train according to claim 1, **characterized in that** at least one of the trailers (2a, 2b) has three axle lines (43), of which a central axle line lies centrally between the central coupling points of the drawbar sections (45a, 45b) connected to the trailer.

3. Trailer train according to claim 1 or 2, **characterized in that** at least one of the trailers has an axle line which lies centrally between the central coupling points of the drawbar sections connected to the trailer.

4. Trailer train according to any one of claims 1 to 3, **characterized in that** at least one of the trailers (60) has two turntable steering mechanisms (63, 64) coupled to each other in opposite directions, each of which is provided for connecting to the drawbar sections.

## Revendications

1. Ensemble de remorquage avec un véhicule de remorquage (1) et au moins une remorque tractée (2a, 2b), dans lequel deux remorques (2a, 2b) sont reliées entre elles par un timon en plusieurs parties (3), le timon en plusieurs parties (3) présente une première section de timon (32) et une deuxième section de timon (30), lesquelles sont accouplées l'une à l'autre aux extrémités tournées l'une vers l'autre de manière à pouvoir pivoter autour d'un axe vertical (10), **caractérisé en ce que** la première section de timon (32) présente une fourche d'accouplement (31) et la deuxième section de timon (30) présente un alésage de fixation pour l'assemblage avec la fourche d'accouplement (31), et la fourche d'accouplement (31) est montée sur la première section de timon (32) de manière à pouvoir tourner autour d'un deuxième axe (29) s'étendant horizontalement dans la direction longitudinale du timon, dans lequel il est prévu une paire de brides de fixation (25) sur le véhicule de remorquage (1) et l'une au moins des remorques (2a, 2b) pour l'assemblage avec une section de timon (30, 32), et les deux sections de timon (30, 32) présentent respectivement une section de fixation en forme de tube ou d'œillet, laquelle peut être accouplée avec un boulon (27) entre les brides de fixation (25), et les sections de fixation sont accouplées entre les brides de fixation (25) de manière à pouvoir pivoter autour d'un axe horizontal (26).

2. Ensemble de remorquage selon la revendication 1, **caractérisé en ce que** l'une au moins des remorques (2a, 2b) présente trois lignes axiales (43), parmi lesquelles une ligne axiale médiane s'étend de façon médiane entre les points d'accouplement médians des sections de timon (45a, 45b) reliées à la remorque.

3. Ensemble de remorquage selon la revendication 1 ou 2, **caractérisé en ce que** l'une au moins des remorques présente une ligne axiale s'étendant de façon médiane entre les points d'accouplement médians des sections de timon reliées à la remorque.

4. Ensemble de remorquage selon l'une des revendications 1 à 3, **caractérisé en ce que** l'une au moins des remorques (60) présente deux directions de sellette (63, 64) accouplées entre elles en sens opposé respectivement prévues pour l'assemblage avec les sections de timon.
